# EUROPEAN PATENT SPECIFICATION

(11) **EP 4 418 199 B1**
(45) Date of publication and mention of the grant of the patent: **08.04.2026**
(21) Application number: 24153896.6
(22) Date of filing: 25.01.2024
(51) Int. Cl.: G06T 3/4038, H04N 23/698

(54) **IMAGE GENERATION METHOD**
BILDERZEUGUNGSVERFAHREN
PROCÉDÉ DE GÉNÉRATION D'IMAGE

(30) Priority: 17.02.2023 JP 2023023443
(43) Date of publication of application: 21.08.2024
(73) Proprietor: SCREEN Holdings Co., Ltd., Kyoto-shi, Kyoto 602-8585 (JP)
(72) Inventor: YASUDA, Takuya, Kyoto 602-8585 (JP)
(74) Representative: Goddar, Heinz J.

(56) References cited:
- EP-B1- 2 929 453
- US-B2- 10 485 505
- US-B2- 11 010 892

## Description

### RELATED APPLICATIONS

This application claims the benefit of Japanese Application No. 2023-023443, filed on February 17, 2023.

### BACKGROUND OF THE INVENTION

### Field of the Invention

The present invention relates to a technique for generating an observation image by combining a plurality of images obtained by image capture.

### Description of the Background Art

Imaging devices have conventionally been known that capture images of cells incubated in a specimen container such as a well plate at high resolutions. For example, Japanese Patent Application Laid-Open No. 2017-161385 discloses such a conventional imaging device.

This type of imaging device generates a single observation image by segmenting a specimen container into a plurality of regions, capturing an image of each region, and combining the captured images. However, if the images of the specimen container are to be captured at higher magnifications and higher resolutions, the size of data to be handled in image composition processing will increase. In that case, a computer that performs the image composition processing requires large-capacity memory. Besides, the increased size of data to be handled makes it difficult to perform the image composition processing at high speed.
EP 2 929 453 B1 relates to the selection and display of biomarker expressions. A computer-implemented method and a computer system are provided for displaying expression levels of one or more biomarkers at field of view of a biological specimen. Embodiments may store image data on biological specimens in a manner that allows generation of images at different resolutions for display on graphical user interfaces.

### SUMMARY OF THE INVENTION

The present invention has been made in light of such circumstances, and it is an object of the present invention to provide a technique for reducing storage capacity required for memory in processing for generating an observation image by combining a plurality of images obtained by image capture.

To solve the problem described above, a first aspect of the present application is a computer-implemented image generation method according to claim 1.

A second aspect of the present application is the image generation method according to the first aspect, in which after the operation (d), among the plurality of partial images, partial images that do not correspond to the observation region are deleted from the memory.

A third aspect of the present application is the image generation method according to the first aspect, in which the operation (f) includes (f-1) segmenting the observation region into a plurality of regions including a first segmented region and a second segmented region, (f-2) combining, among the plurality of partial images, partial images that correspond to the first segmented region into a composite image of the first segmented region, and (f-3) combining, among the plurality of partial images, partial images that correspond to the second segmented region into a composite image of the second segmented region. The operation (f-3) is executed after completion of the operation (f-2).

A fourth aspect of the present application is the image generation method according to the third aspect, in which after the operation (f-2), the partial images that correspond to the first segmented region are deleted from the memory.

A fifth aspect of the present application is the image generation method according to any one of the first to fourth aspects, in which the operation (c) further includes detecting a reduced region of interest that corresponds to a region of interest from the observation region, and the operation (d) further includes calculating the region of interest that is not reduced, in accordance with the reduced region of interest.

A sixth aspect of the present application is the image generation method according to the fifth aspect, wherein in the operation (d), a region that is larger than a region obtained by enlarging the reduced region of interest to N times is determined as the region of interest.

According to the first to sixth aspects, the observation region that is not reduced is calculated based on the reduced observation region detected from the reduced composite image. Accordingly, it is possible to reduce the size of data to be handled as compared to the case where an observation region is detected from a composite image that is not reduced. As a result, storage capacity required for the memory can be reduced.

According to the first to sixth aspects, the observation image is generated by combining, among the partial images, only those that correspond to the observation region. Accordingly, it is possible to reduce the size of data to be handled as compared to the case where a composite image of the entire imaging region is obtained. As a result, the storage capacity required for the memory is reduced.

In particular, according to the second aspect, the storage capacity required for the memory is further reduced by deleting partial images that do not correspond to the observation region from the memory.

In particular, according to the third aspect, the composition of the partial images is performed with different timing for each segmented region. This further reduces the storage capacity required for the memory at each time.

In particular, according to the fourth aspect, the storage area is released by deleting the partial images that have been combined from the memory. This further reduces the storage capacity required for the memory.

In particular, according to the fifth aspect, the region of interest that is not reduced is calculated in accordance with the reduced region of interest detected from the reduced composite image. This reduces the storage capacity required for the memory as compared to the case where the region of interest is detected from a composite image that is not reduced.

In particular, according to the sixth aspect, the region of interest is set relatively large in consideration of errors in the reduced region of interest. This reduces the possibility that an insufficient region of interest may be set.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing an example of an imaging device;
Fig. 2 is a diagram showing an example of a plurality of partial images;
Fig. 3 is a flowchart showing the procedure for generating an observation image;
Fig. 4 is a diagram showing processing performed in step S1;
Fig. 5 is a diagram showing processing performed in step S2;
Fig. 6 is a diagram showing processing performed in step S3;
Fig. 7 is a diagram showing processing performed in step S4;
Fig. 8 is a diagram showing processing performed in step S5;
Fig. 9 is a diagram showing processing performed in step S6;
Fig. 10 is a diagram showing the processing performed in step S6;
Fig. 11 is a flowchart showing the procedure for generating an observation image according to a first variation;
Fig. 12 is a diagram showing processing performed in steps S4 to S4A;
Fig. 13 is a diagram showing processing performed in step S5A;
Fig. 14 is a flowchart showing the procedure for generating an observation image according to a second variation; and
Fig. 15 is a diagram showing processing performed in step S3B.

### DESCRIPTION OF THE PREFERRED EMBODIMENTS

Hereinafter, a preferred embodiment of the present invention will be described with reference to the drawings.

### 1. Imaging device

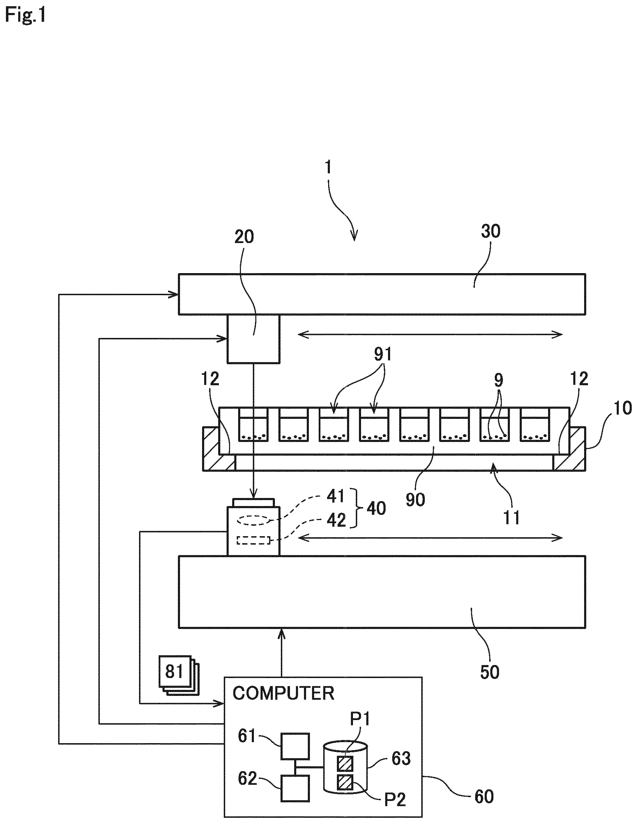

Fig. 1 is a diagram showing an example of an imaging device 1 that executes an image generation method according to the present invention. The imaging device 1 is a device for capturing images of a specimen container at high resolutions, the specimen container storing cells 9 to be observed. The specimen container may, for example, a well plate 90. The well plate 90 is formed of a transparent resin that passes light. The well plate 90 includes a plurality of wells 91. Each well 91 is a recessed portion that is recessed downward from the upper surface of the well plate 90. For example, the wells 91 may have a circular shape when viewed from above. The cells 9 are held together with a culture solution in each well 91.

An object to be observed may be a single cell 9, or may be a cell cluster (spheroid) formed of a plurality of cells 9. The object to be observed may also be the structure of a living organism or part of that structure.

As shown in Fig. 1, the imaging device 1 includes a stage 10, a projector 20, a projector moving mechanism 30, a camera 40, a camera moving mechanism 50, and a computer 60.

The stage 10 is a placement base that holds the well plate 90. The position of the stage 10 in the imaging device 1 is fixed at least during image capture. The stage 10 has a rectangular opening 11 in the center, the opening vertically penetrating the stage. The stage 10 also has a support face 12 extending along the outside shape of the well plate 90 around the opening 11. The well plate 90 is fitted in the opening 11 and is supported in a horizontal position by the support face 12. Thus, the tops and bottoms of the wells 91 are exposed without being covered by the stage 10.

The projector 20 is arranged above the well plate 90 held on the stage 10. The projector 20 includes a light source such as LEDs. The light source in the projector 20 emits light during image capture of the cells 9. Thus, downward illumination light (epi-illumination) is emitted from the projector 20 toward the well plate 90.

The projector moving mechanism 30 is a mechanism for moving the projector 20 in the horizontal direction along the upper surface of the well plate 90 held on the stage 10. For example, the projector moving mechanism 30 may be a mechanism for converting rotational motion of a motor into translatory motion via a ball screw. The projector moving mechanism 30 is capable of moving the projector 20 relative to the well plate 90 with fine pitches in the right-left direction and the depth direction in Fig. 1. The pitch of movement of the projector 20 may be smaller than the size of one well 91.

The camera 40 is arranged below the well plate 90 held on the stage 10. The camera 40 includes an optical system 41 such as a lens and an image sensor 42 such as a CCD or a CMOS. During image capture of the cells 9, the projector 20 emits downward illumination light toward a given portion of the well plate 90, and the camera 40 captures an image of that portion of the well plate 90. In this way, the camera 40 acquires an image of that portion of the well plate 90. The image is digital data having a tone value for each pixel. The camera 40 outputs the acquired image to the computer 60.

The camera moving mechanism 50 is a mechanism for moving the camera 40 in the horizontal direction along the lower surface of the well plate 90 held on the stage 10. For example, the camera moving mechanism 50 may be a mechanism for converting rotational motion of a motor into translatory motion via a ball screw. The camera moving mechanism 50 is capable of moving the camera 40 relative to the well plate 90 with fine pitches in the right-left direction and the depth direction in Fig. 1. The pitch of movement of the camera 40 is smaller than the size of one well 91.

The projector moving mechanism 30 and the camera moving mechanism 50 described above are driven in synchronization with each other with the same pitch. Accordingly, the projector 20 and the camera 40 are always arranged in the same position when viewed from above. That is, the projector 20 and the camera 40 are moved by the same distance in the same direction. When the camera 40 is arranged at a position below a certain portion of the well plate 90, the projector 20 is always arranged at a position above that portion of the well plate 90.

The computer 60 includes a processor 61 such as a CPU, memory 62 such as RAM, and a storage 63 such as a hard disk drive. The storage 63 stores a control program P1 for causing the imaging device 1 to execute imaging processing and an image processing program P2 for processing images obtained by image capture.

As shown in Fig. 1, the computer 60 is communicably connected to each of the projector 20, the projector moving mechanism 30, the camera 40, and the camera moving mechanism 50 described above. The computer 60 controls operations of these components in accordance with the control program P1. This allows imaging processing by the imaging device 1 to proceed.

The camera 40 segments an imaging region that includes one well 91 into a plurality of regions and captures images of these regions. That is, a region to be captured by a single image capture of the camera 40 is smaller than the size of one well 91 in plan view. The imaging device 1 repeats image capture by the camera 40 and fine movements of the projector 20 and the camera 40 by the projector moving mechanism 30 and the camera moving mechanism 50. Accordingly, a plurality of images of fine regions of the well plate 90 are obtained. Hereinafter, the images of fine regions of the well plate 90 are referred to as "partial images 81." The camera 40 outputs a plurality of partial images 81 obtained by image capture to the computer 60. In this way, the computer 60 acquires a plurality of partial images 81.

### 2. Generation of Observation Image

The computer 60 generates an observation composite image by processing the partial images 81 input from the camera 40 in accordance with the image processing program P2. Hereinafter, this observation composite image is referred to as the "observation image 87." The processing for generating the observation image 87 will be described hereinafter.

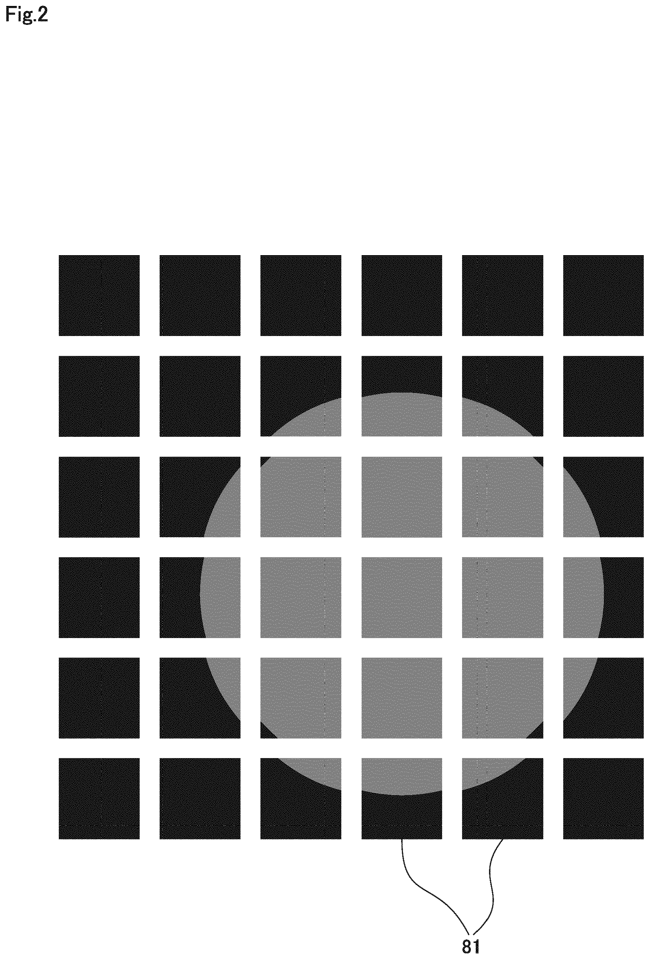

Fig. 2 is a diagram showing an example of a plurality of partial images 81. In Fig. 2, portions that correspond to the well 91 are indicated by gray, and portions other than the well 91 are indicated by black. In the example shown in Fig. 2, an imaging region that includes one well 91 is segmented into and captured as 36 partial images 81. The partial images 81 may include portions that overlap one another. The computer 60 stores the obtained partial images 81 in the memory 62 or the storage 63.

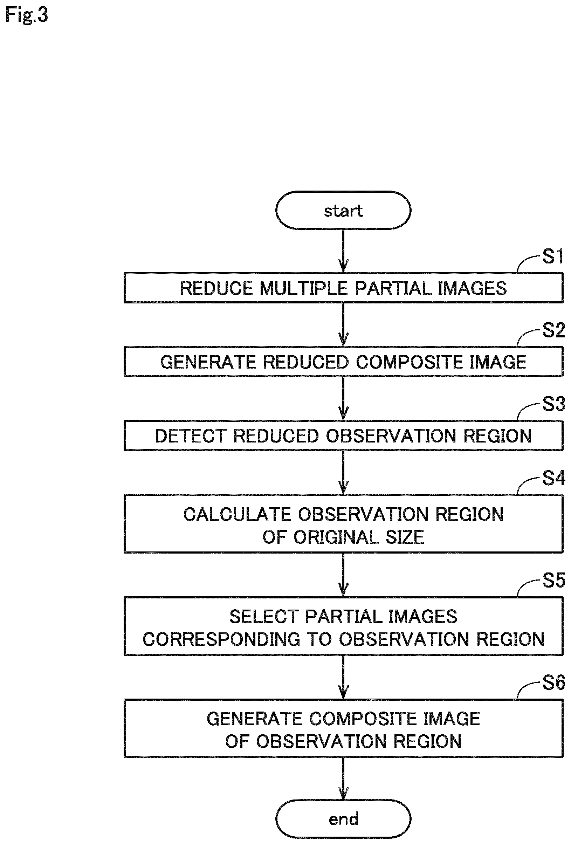

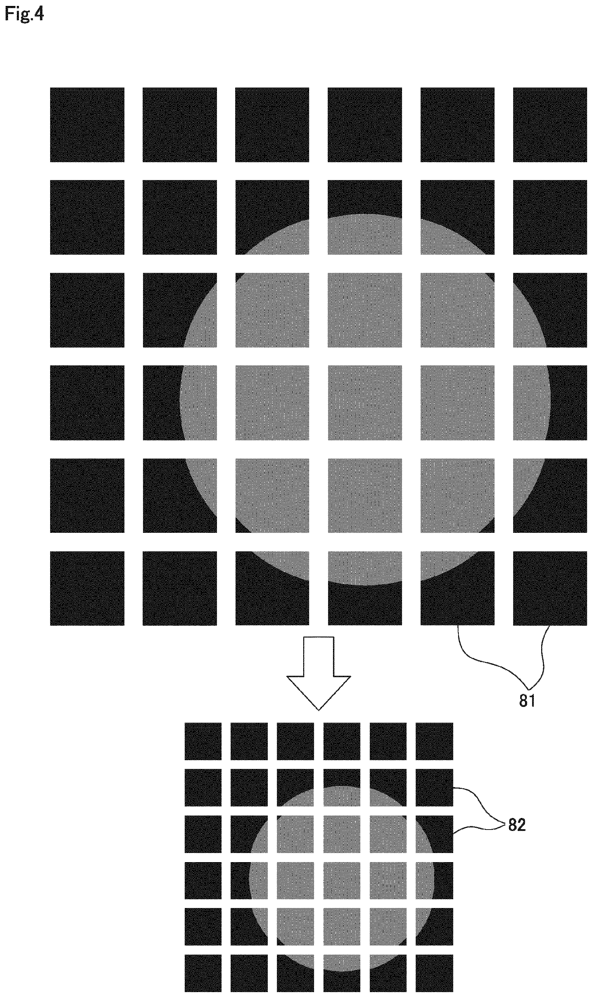

Fig. 3 is a flowchart showing the procedure for generating the observation image 87 in accordance with the partial images 81. As shown in Fig. 3, the computer 60 first reduces each of the partial images 81 (step S1). Accordingly, a plurality of reduced partial images 82 that are smaller in size than the partial images 81 of the original size are generated. Fig. 4 is a diagram showing the processing performed in step S1. **In** the example shown in Fig. 4, the 36 partial images 81 in Fig. 2 are reduced to generate 36 reduced partial images 82.

The reduction ratio of the partial images 81 may be set to a fixed magnification by the computer 60. Alternatively, the computer 60 may determine the reduction ratio in accordance with the free space of the memory 62.

The computer 60 stores the generated reduced partial images 82 in the memory 62. At this time, in order to save the storage capacity of the memory 62, the computer 60 may delete the partial images 81 of the original size from the memory 62 after the reduced partial images 82 have been generated.

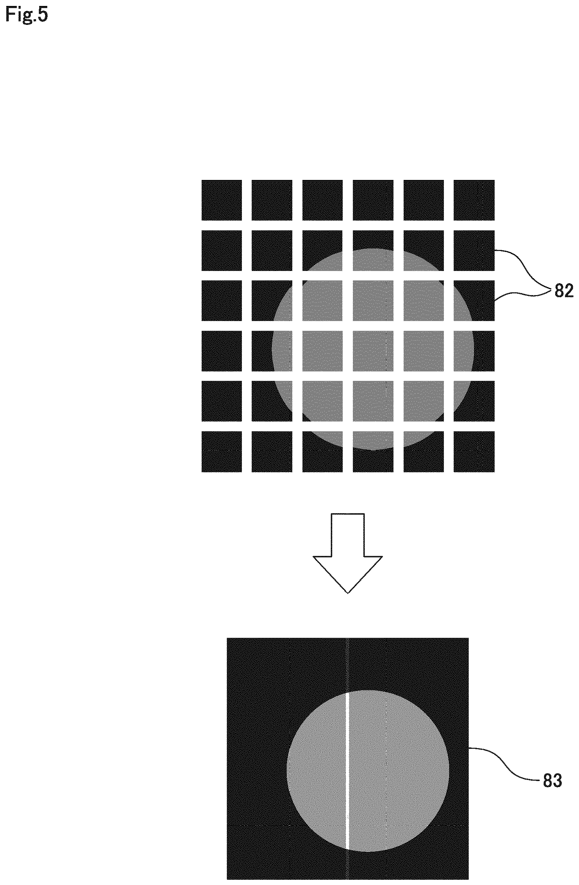

Next, the computer 60 generates a reduced composite image 83 by combining the reduced partial images 82 (step S2). The reduced composite image 83 is an image of the entire imaging region that is smaller in size than the composite image obtained by combining the partial images 81 of the original size. Fig. 5 is a diagram showing the processing performed in step S2. In the example shown in Fig. 5, the 36 reduced partial images 82 generated in Fig. 4 are combined into one reduced composite image 83.

The computer 60 stores the generated reduced composite image 83 in the memory 62. At this time, in order to save the storage capacity of the memory 62, the computer 60 may delete the reduced partial images 82 from the memory 62 after the reduced composite image 83 has been generated.

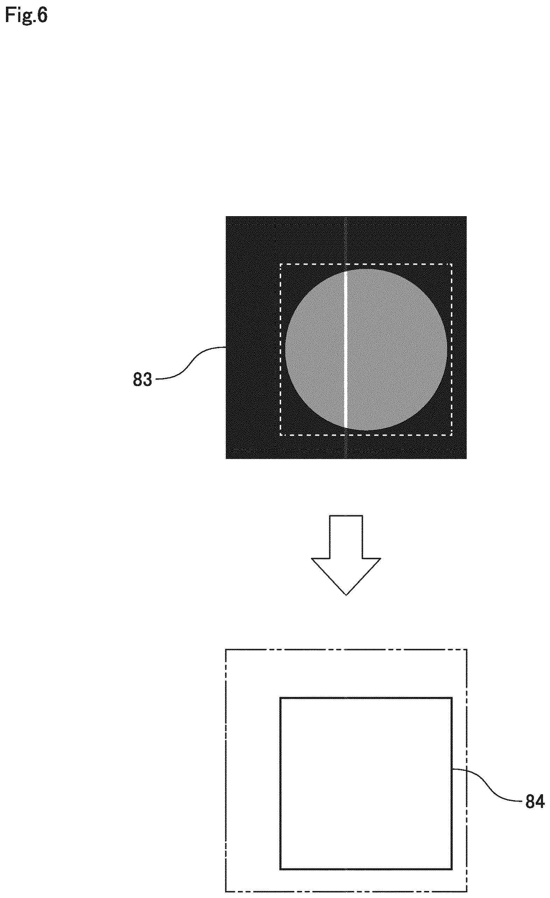

Then, the computer 60 detects a reduced observation region 84 from the reduced composite image 83, the reduced observation region corresponding to an observation region smaller than the imaging region (step S3). Fig. 6 is a diagram showing the processing performed in step S3. In the example shown in Fig. 6, a rectangular region that includes the circular region corresponding to the well 91 is detected as the reduced observation region 84. The reduced observation region 84 is not the image data having a tone value for each pixel, but is information indicating a two-dimensional range of coordinates. Thus, the amount of data of the reduced observation region 84 is smaller than the amount of data of an image of the same size.

The computer 60 stores the detected reduced observation region 84 in the memory 62. At this time, in order to save the storage capacity of the memory 62, the computer 60 may delete the reduced composite image 83 from the memory 62 after the reduced observation region 84 has been detected.

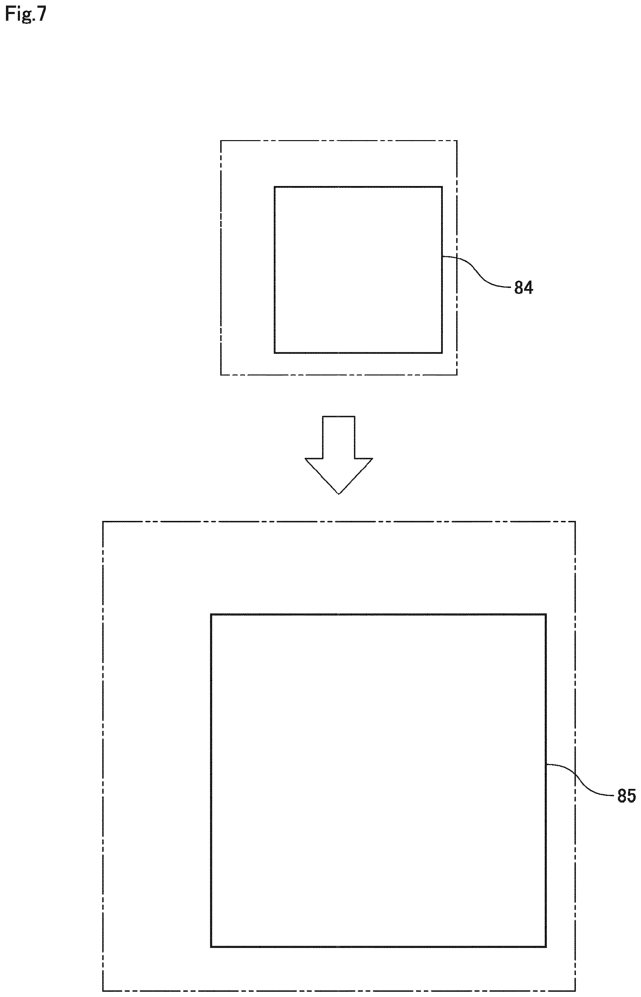

Then, the computer 60 calculates an observation region 85 of the original size that is not reduced, in accordance with the reduced observation region 84 (step S4). Fig. 7 is a diagram showing the processing performed in step S4. As shown in Fig. 7, the computer 60 calculates the observation region 85 of the original size by enlarging the reduced observation region 84 using a predetermined origin as the center. The enlargement ratio of the observation region is assumed to be a reciprocal of the reduction ratio of the partial image 81 in step S1. For example, in the case where the partial image 81 is reduced to 1/N times in step S1, the reduced observation region 84 is enlarged to N times in step S4. In this case, N is assumed to be an integer greater than 1.

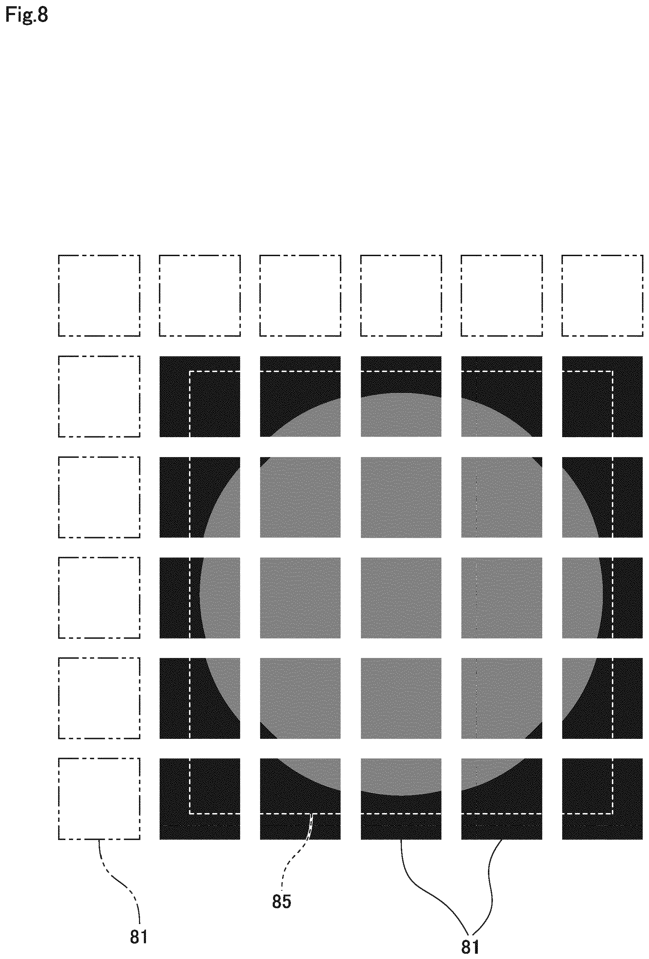

Then, the computer 60 selects the partial images 81 that correspond to the observation region 85 from among the partial images 81 of the original size (step S5). Fig. 8 is a diagram showing the processing performed in step S5. As shown in Fig. 8, the computer 60 selects partial images 81 that include at least part of the observation region 85 from among the partial images 81. Then, the computer 60 reads out the selected partial images 81 from the storage 63 into the memory 62.

The computer 60 does not read those of the partial images 81 that do not correspond to the observation region 85 into the memory 62. That is, the computer 60 does not read the partial images 81 indicated by chain double-dashed lines in Fig. 8 into the memory 62. In the case where the memory 62 stores partial images 81 that do not correspond to the observation region 85, the computer 60 deletes these partial images 81 from the memory 62.

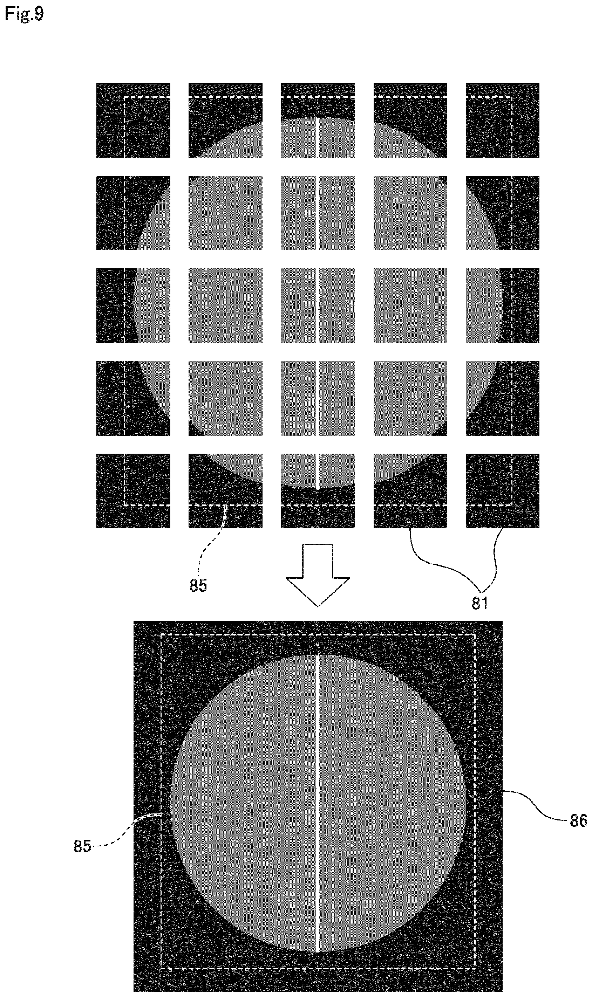

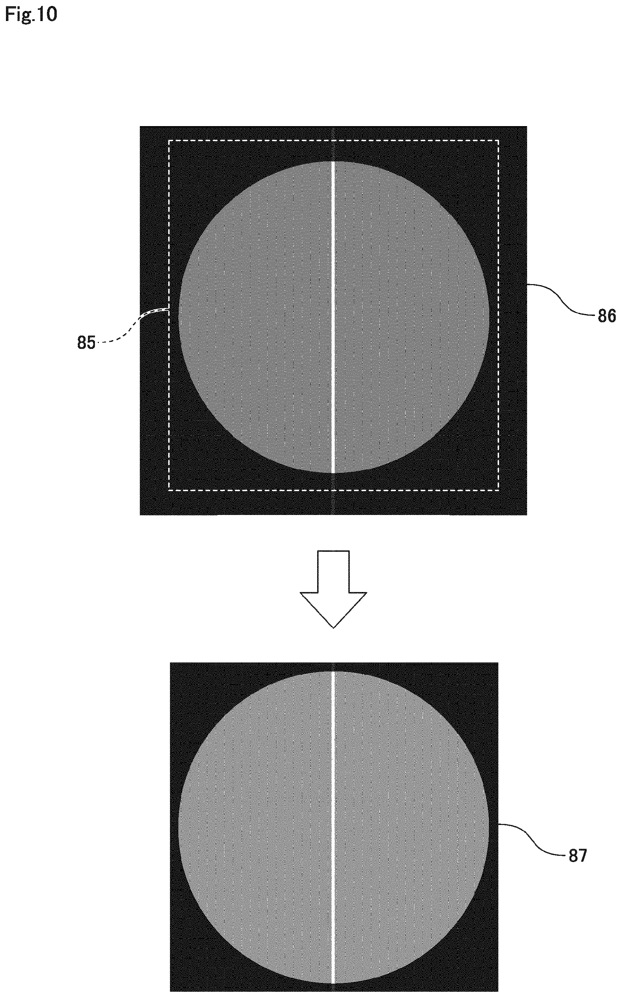

Thereafter, the computer 60 generates an observation image 87 as a composite image of the observation region 85 by combining the partial images 81 selected in step S5 (step S6). Figs. 9 and 10 are diagrams showing the processing performed in step S6. The computer 60 first generates a composite image 86 by combining the selected partial images 81 as shown in Fig. 9. Thereafter, the computer 60 cuts out the observation region 85 from the composite image 86 as shown in Fig. 10. Accordingly, the image of the observation region 85 of the original size, i.e., the observation image 87, is generated.

As described above, the computer 60 first generates the reduced composite image 83 by reducing the partial images 81 and then combining the reduced partial images. The computer 60 then detects the reduced observation region 84 corresponding to the observation region from the reduced composite image 83. Then, the computer 60 calculates the observation region 85 of the original size that is not reduced, from the reduced observation region 84. This reduces the storage capacity of the memory 62 required to detect the observation region 85 as compared to the case where the observation region 85 is detected from a composite image that is not reduced. Besides, since the size of data to be handled is reduced, the computer 60 is capable of detecting the observation region 85 at high speed.

The computer 60 also generates the observation image 87 by combining only those of the partial images 81 that correspond to the observation region 85. This reduces the storage capacity of the memory 62 required to generate the composite image as compared to the case where a composite image of the entire imaging region is generated by using all of the partial images 81 of the imaging region. Besides, since the size of data to be handled is reduced, the computer 60 is capable of generating the observation image 87 at high speed.

### 3. Variations

While one embodiment of the present invention has been described thus far, the present invention is not intended to be limited to the aforementioned embodiment. Hereinafter, various variations will be described focusing on differences from the aforementioned embodiment.

### 3-1. First Variation

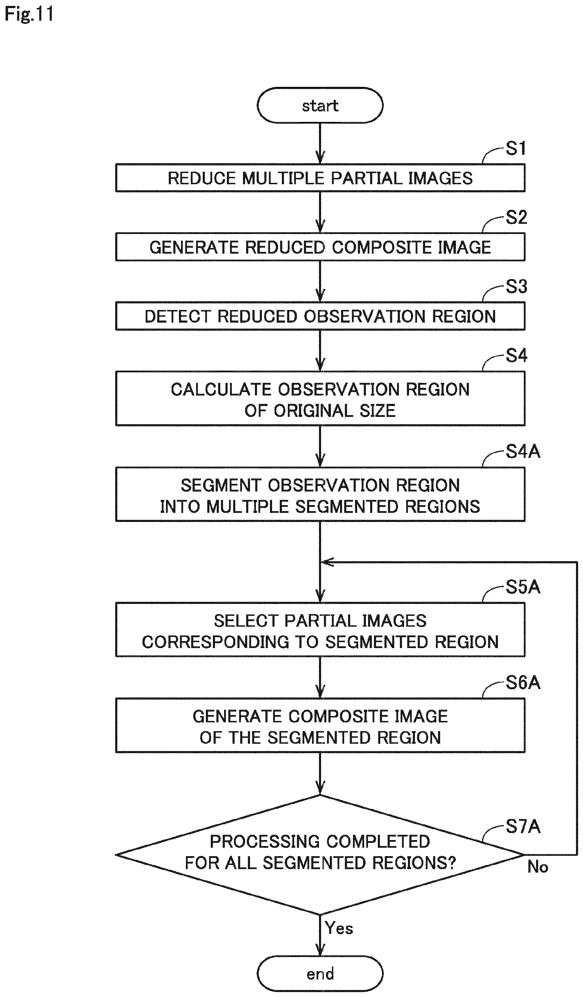

Fig. 11 is a flowchart showing the procedure for generating an observation image according to a first variation. The procedure shown in Fig. 11 differs from the procedure shown in Fig. 3 in that steps S4A to S7A are executed instead of steps S5 and S6 described above.

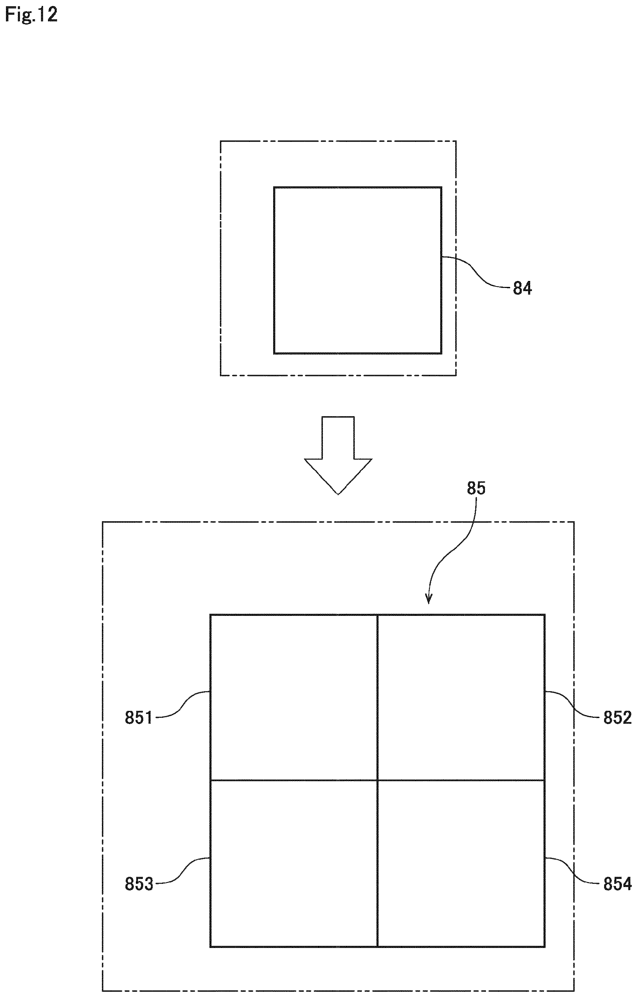

In the example shown in Fig. 11, after the observation region 85 has been calculated in step S4, the computer 60 segments the observation region 85 into a plurality of segmented regions (step S4A). Fig. 12 is a diagram showing the processing performed in steps S4 to S4A. In the example shown in Fig. 12, the observation region 85 is segmented into first to fourth segmented regions 851 to 854. The computer 60 stores the obtained first to fourth segmented regions 851 to 854 in the memory 62.

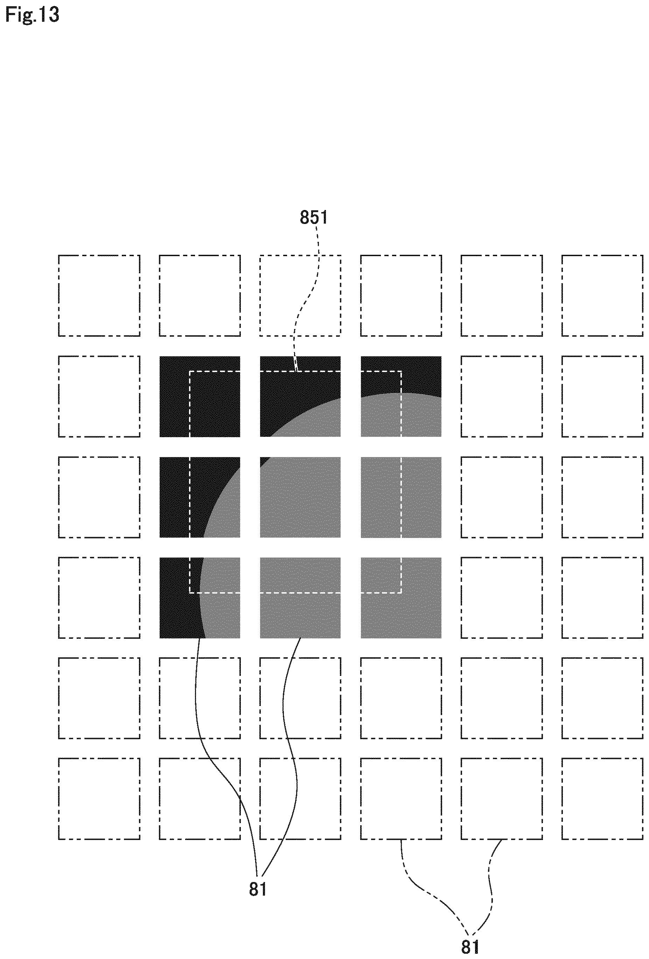

Then, the computer 60 selects partial images 81 that correspond to the first segmented region 851 from among the partial images 81 of the original size (step S5A). Fig. 13 is a diagram showing the processing performed in step S5A. As shown in Fig. 13, the computer 60 selects partial images 81 that include at least part of the first segmented region 851 from among the partial images 81. Then, the computer 60 reads out the selected partial images 81 from the storage 63 into the memory 62.

The computer 60 does not read out those of the partial images 81 that do not correspond to the first segmented region 851 into the memory 62. That is, the computer 60 does not read the partial images 81 indicated by chain double-dashed lines in Fig. 13 into the memory 62. In the case where the memory 62 stores the partial images 81 that do not correspond to the first segmented region 851, the computer 60 deletes these partial images 81 from the memory 62.

Then, the computer 60 generates a composite image of the first segmented region 851, i.e., a first observation image, by combining the partial images 81 selected in step S5A (step S6A). Specifically, in the same manner as described in step S6, the selected partial images 81 are combined and then the first segmented region 851 is cut out from the obtained composite image.

When the generation of the first observation image has completed, the computer 60 deletes the partial images 81 corresponding to the first segmented region 851 from the memory 62. Thereafter, the computer 60 determines whether the generation of the observation images for all of the segmented regions is completed (step S7A).

If the generation of the observation images for all of the segmented regions has not been completed yet (No in step S7A), the computer 60 executes the processing from steps S5A to S6A for the next segmented region. In this way, by repeating the processing from steps S5A to S6A, the observation images corresponding to the first, second, third, and fourth segmented regions 851, 852, 853, and 854 are generated in sequence.

When the generation of the observation images for all of the segmented regions has completed (Yes in step S7A), the computer 60 ends the processing for generating the observation images.

As described above, according to the first variation, the computer 60 segments the observation region 85 into the segmented regions 851 to 854. Then, the computer 60 combines the partial images 81 with different timing for each segmented region, which is smaller than the observation region 85. This further reduces the storage capacity of the memory 62 required at each time.

In particular, according to the first variation, after the observation image corresponding to one segmented region is generated in step S6A, the computer 60 deletes the partial images 81 corresponding to that segmented region from the memory 62. In this way, the partial images 81 that have been combined are sequentially deleted from the memory 62. This efficiently releases the storage area of the memory 62. Accordingly, it is possible to further reduce the storage capacity of the memory 62 required to generate the observation image.

In the example shown in Fig. 12, one observation region 85 is segmented into the four segmented regions 851 to 854. However, the number of segmented regions of the observation region 85 may be two, three, or five or more.

### 3-2. Second Variation

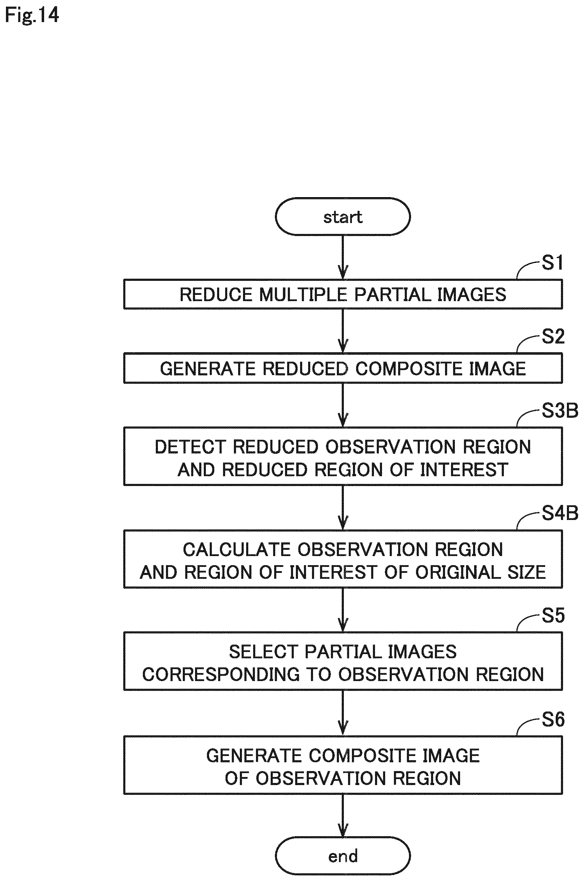

Fig. 14 is a flowchart showing the procedure for generating the observation image 87 according to a second variation. The procedure shown in Fig. 14 differs from the procedure shown in Fig. 3 in that steps S3B to 4B are executed instead of steps S3 to S4 described above.

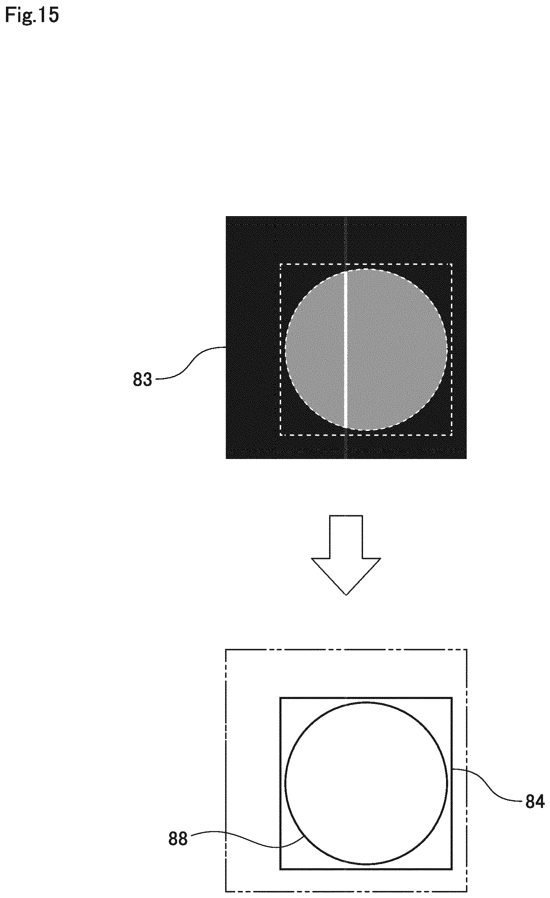

In the example shown in Fig. 14, after the reduced composite image 83 has been generated, the computer 60 detects not only the reduced observation region 84 but also a reduced region of interest 88 that corresponds to the well 91 (step S3B). Fig. 15 is a diagram showing the processing performed in step S3B. In the example shown in Fig. 15, a circular reduced region of interest 88 that corresponds to the well 91 is detected from inside the reduced observation region 84. In two-dimensional coordinates, the reduced region of interest 88 is expressed by a straight line, an n-order polynomial, a circle, or an approximate combining them. The computer 60 stores the detected reduced region of interest 88 in the memory 62.

Then, the computer 60 calculates the observation region 85 and the region of interest of the original size that are not reduced, in accordance with the reduced observation region 84 and the reduced region of interest 88 (step S4B). As in the case of the reduced observation region 84, the computer 60 also calculates the region of interest of the original size by enlarging the reduced region of interest 88 using a predetermined origin as the center.

As described above, according to the second variation, the computer 60 detects not only the reduced observation region 84 but also the reduced region of interest 88 from the reduced composite image 83. Then, the region of interest of the original size is calculated by enlarging the reduced region of interest 88. This reduces the storage capacity of the memory 62 required to detect the region of interest as compared to the case where the region of interest is detected from the composite image of the original size. Besides, since the size of data to be handled is reduced, the computer 60 is capable of detecting the region of interest at high speed.

The enlargement ratio of the region of interest in step S4B is assumed to be a reciprocal of the reduction ratio of the partial image 81 in step S1. For example, in the case where the partial images 81 are reduced to 1/N times in step S1, the reduced region of interest 88 is enlarged to N times in step S4B. In this case, N is assumed to be an integer greater than 1. It is, however, noted that the region of interest may be determined to be a slightly larger region than the region obtained by enlarging the reduced region of interest 88 to N times, in consideration of the fact that errors may also be enlarged by the enlargement of the reduced region of interest 88. This reduces the possibility that an insufficient region of interest may be set in the observation image 87 of the original size.

### 3-3. Other Variations

In the aforementioned embodiment, the control of the operations of the imaging device 1 and the image processing for generating the observation image 87 are both executed by one computer 60. However, the control of the operations of the imaging device 1 and the image processing for generating the observation image 87 may be executed by different computers. That is, the image generation method according to the present invention may be executed by a different computer other than the computer of the imaging device for acquiring a plurality of partial images.

In the aforementioned embodiment, the partial images 81 are captured under transmitted light. However, a plurality of partial images according to the present invention may be captured under other conditions such as under reflected light.

In the aforementioned embodiment, each well 91 in the well plate 90 has a circular shape when viewed from above. However, the shape of each well 91 when viewed from above may be any shape other than a circular shape. For example, each well 91 may have a rectangular shape with round corners when viewed from above.

In the aforementioned embodiment, the container for storing the object to be observed is the well plate 90 including the wells 91. However, the container for storing the object to be observed may be any other item such as a schale (petri dish) having a single recessed portion.

The in invention is defined by the appened claims.

## Claims

1. A computer-implemented image generation method of generating an observation image (87) from a plurality of partial images (81) obtained by segmenting an imaging region including an object to be observed into a plurality of regions and capturing images of the plurality of regions, the observation image being a composite image of an observation region (85) corresponding to the object to observed that is smaller than the imaging region,
the image generation method causing a computer (60) including memory (62) to execute:
(a) generating a plurality of reduced partial images (82) by reducing the plurality of partial images (81);
(b) combining the plurality of reduced partial images (82) into a reduced composite image (83);
(c) detecting a reduced observation region (84) that corresponds to object to be observed from the reduced composite image (83);
(d) calculating the observation region (85) that is not reduced, in accordance with the reduced observation region (84);
(e) selecting partial images (81) that include at least part of the observation region (85) from among the partial images; and
(f) generating the observation image (87) by combining, among the plurality of partial images (81), the selected partial images (81) that correspond to the observation region (85), wherein the reduced observation region (84) is not the image data having tone value for each pixel, but is information indicating a two-dimensional range of coordinates, and
in the operation (a), the partial images (81) are respectively reduced to l/N times, and in the operation (d) the reduced observation region (84) is enlarged to N times to calculate the observation region (85).

2. The image generation method according to claim 1, wherein
after the operation (d), among the plurality of partial images (81), partial images (81) that do not correspond to the observation region (85) are deleted from the memory (62).

3. The image generation method according to claim 1, wherein
the operation (f) includes:
(f-1) segmenting the observation region (85) into a plurality of regions including a first segmented region (851) and a second segmented region (852);
(f-2) combining, among the plurality of partial images (81), partial images (81) that correspond to the first segmented region (851) into a composite image of the first segmented region (851); and
(f-3) combining, among the plurality of partial images (81), partial images (81) that correspond to the second segmented region (852) into a composite image of the second segmented region (852), and
the operation (f-3) is executed after completion of the operation (f-2).

4. The image generation method according to claim 3, wherein
after the operation (f-2), the partial images (81) that correspond to the first segmented region (851) are deleted from the memory (62).

5. The image generation method according to claim 1 or 2, wherein
the operation (c) further includes detecting a reduced region of interest (88) that corresponds to a region of interest from the observation region (85), and
the operation (d) further includes calculating the region of interest that is not reduced, in accordance with the reduced region of interest (88).

6. The image generation method according to claim 5, wherein
in the operation (d), a region that is larger than a region obtained by enlarging the reduced region of interest (88) to N times is determined as the region of interest.

## Patentansprüche

1. Computerimplementiertes Bilderzeugungsverfahren zum Erzeugen eines Beobachtungsbildes (87) aus einer Vielzahl von Teilbildern (81), die durch Segmentieren eines Abbildungsbereichs, der ein zu beobachtendes Objekt enthält, in eine Vielzahl von Bereichen und Aufnehmen von Bildern der Vielzahl von Bereichen erhalten werden, wobei das Beobachtungsbild ein zusammengesetztes Bild eines Beobachtungsbereichs (85) ist, der dem zu beobachtenden Objekt entspricht, der kleiner als der Abbildungsbereich ist, wobei das Bilderzeugungsverfahren bewirkt, dass ein Computer (60), der einen Speicher (62) enthält, Folgendes ausführt:
(a) Erzeugen einer Vielzahl von reduzierten Teilbildern (82) durch Reduzieren der Vielzahl von Teilbildern (81);
(b) Kombinieren der Vielzahl von reduzierten Teilbildern (82) zu einem reduzierten zusammengesetzten Bild (83);
(c) Detektieren eines reduzierten Beobachtungsbereichs (84), der dem zu beobachtenden Objekt entspricht, aus dem reduzierten zusammengesetzten Bild (83);
(d) Berechnen des Beobachtungsbereichs (85), der nicht reduziert ist, gemäß dem reduzierten Beobachtungsbereich (84);
(e) Auswählen von Teilbildern (81), die mindestens einen Teil des Beobachtungsbereichs (85) enthalten, aus den Teilbildern; und
(f) Erzeugen des Beobachtungsbildes (87) durch Kombinieren der ausgewählten Teilbilder (81), die dem Beobachtungsbereich (85) entsprechen, aus der Vielzahl von Teilbildern (81), wobei der reduzierte Beobachtungsbereich (84) nicht die Bilddaten ist, die einen Tonwert für jedes Pixel aufweisen, sondern Informationen ist, die einen zweidimensionalen Koordinatenbereich angeben, und
in dem Schritt (a) die Teilbilder (81) jeweils auf das 1/N-fache reduziert werden und in dem Schritt (d) der reduzierte Beobachtungsbereich (84) auf das N-fache vergrößert wird, um den Beobachtungsbereich (85) zu berechnen.

2. Bilderzeugungsverfahren nach Anspruch 1, wobei nach dem Schritt (d) aus der Vielzahl von Teilbildern (81) Teilbilder (81), die nicht dem Beobachtungsbereich (85) entsprechen, aus dem Speicher (62) gelöscht werden.

3. Bilderzeugungsverfahren nach Anspruch 1, wobei der Schritt (f) Folgendes enthält:
(f-1) Segmentieren des Beobachtungsbereichs (85) in eine Vielzahl von Bereichen, die einen ersten segmentierten Bereich (851) und einen zweiten segmentierten Bereich (852) enthalten;
(f-2) Kombinieren aus der Vielzahl von Teilbildern (81) von Teilbildern (81), die dem ersten segmentierten Bereich (851) entsprechen, zu einem zusammengesetzten Bild des ersten segmentierten Bereichs (851); und
(f-3) Kombinieren aus der Vielzahl von Teilbildern (81) von Teilbildern (81), die dem zweiten segmentierten Bereich (852) entsprechen, zu einem zusammengesetzten Bild des zweiten segmentierten Bereichs (852), und der Schritt (f-3) nach Abschluss des Schritts (f-2) ausgeführt wird.

4. Bilderzeugungsverfahren nach Anspruch 3, wobei nach dem Schritt (f-2) die Teilbilder (81), die dem ersten segmentierten Bereich (851) entsprechen, aus dem Speicher (62) gelöscht werden.

5. Bilderzeugungsverfahren nach Anspruch 1 oder 2, wobei
der Schritt (c) ferner das Detektieren eines reduzierten Bereichs von Interesse (88), der einem Bereich von Interesse entspricht, aus dem Beobachtungsbereich (85) enthält und
der Schritt (d) ferner das Berechnen des Bereichs von Interesse, der nicht reduziert ist, gemäß dem reduzierten Bereich von Interesse (88) enthält.

6. Bilderzeugungsverfahren nach Anspruch 5, wobei
in dem Schritt (d) ein Bereich, der größer ist als ein Bereich, der durch Vergrößern des reduzierten Bereichs von Interesse (88) auf das N-fache erhalten wird, als der Bereich von Interesse bestimmt wird.

## Revendications

1. Procédé informatisé de génération d'image pour la génération d'une image d'observation (87) d'après une pluralité d'images partielles (81) obtenues en segmentant une zone d'imagerie comprenant un objet à observer en une pluralité de zones et en saisissant des images de la pluralité de zones, l'image d'observation étant une image composite d'une zone d'observation (85) correspondant à l'objet à observer, qui est plus petite que la zone d'imagerie,
le procédé de génération d'image amenant un ordinateur (60) comprenant une mémoire (62) à exécuter :
(a) la génération d'une pluralité d'images partielles réduites (82) en réduisant la pluralité d'images partielles (81) ;
(b) la combinaison de la pluralité d'images partielles réduites (82) en une image composite réduite (83) ;
(c) la détection d'une zone d'observation réduite (84) correspondant à l'objet à observer depuis l'image composite réduite (83) ;
(d) le calcul de la zone d'observation (85) non réduite conformément à la zone d'observation réduite (84) ;
(e) la sélection d'images partielles (81) comprenant au moins une partie de la zone d'observation (85) parmi les images partielles ; et
(f) la génération de l'image d'observation (87) en combinant, parmi la pluralité d'images partielles (81), les images partielles sélectionnées (81) correspondant à la zone d'observation (85), la zone d'observation réduite (84) n'étant pas une valeur de tonalité des données d'image pout chaque pixel, bien plutôt des informations indiquant une plage bidimensionnelle de coordonnées, et
à l'opération (a), les images partielles (81) sont réduites respectivement à I/N fois, et à l'opération (d) la zone d'observation réduite (84) est agrandie à N fois pour calculer la zone d'observation (85).

2. Procédé de génération d'image selon la revendication 1,
après l'opération (d), parmi la pluralité d'images partielles (81), les images partielles (81) ne correspondant pas à la zone d'observation (85) sont effacées de la mémoire (62).

3. Procédé de génération d'image selon la revendication 1,
l'opération (f) comprenant :
(f-1) la segmentation de la zone d'observation (85) en une pluralité de zones comprenant une première zone segmentée (851) et une deuxième zone segmentée (852) ;
(f-2) la combinaison, parmi la pluralité d'images partielles (81), d'images partielles (81) ne correspondant pas à la première zone segmentée (851) en une image composite de la première zone segmentée (851) ; et
(f-3) la combinaison, parmi la pluralité d'images partielles (81), d'images partielles (81) correspondant à la deuxième zone segmentée (852) en une image composite de la deuxième zone segmentée (852) ; et
l'opération (f-3) étant exécutée après l'achèvement de l'opération (f-2).

4. Procédé de génération d'image selon la revendication 3,
dans lequel, après l'opération (f-2), les images partielles (81) correspondant à la première zone segmentée (851) sont effacées de la mémoire (62).

5. Procédé de génération d'image selon la revendication 1 ou 2,
l'opération (c) comprenant en outre la détection d'une zone d'intérêt réduite (88) correspondant à une zone d'intérêt depuis la zone d'observation (85), et
l'opération (d) comprenant en outre le calcul de la zone d'intérêt qui n'est pas réduite, conformément à la zone d'intérêt réduite (88).

6. Procédé de génération d'image selon la revendication 5,
dans lequel, à l'opération (d), une zone plus grande qu'une zone obtenue en agrandissant la zone d'intérêt réduite (88) à N fois est établie comme étant la zone d'intérêt.
